# DEMANDE DE BREVET EUROPEEN

(11) **EP 3 716 120 A1**
(43) Date de publication de la demande: **30.09.2020**
(21) Numéro de dépôt: 20165047.0
(22) Date de dépôt: 23.03.2020
(51) Int. Cl.: G06F 21/60, G06F 21/57

(54) **GÉNÉRATION DE CLÉ DE CHIFFREMENT/DÉCHIFFREMENT ÉPHÉMÈRE À CHAQUE DÉMARRAGE**

(30) Priorité: 25.03.2019 FR 1903063
(71) Demandeur: STMicroelectronics (Rousset) SAS, 13790 Rousset (FR); PROTON WORLD INTERNATIONAL N.V., 1831 Diegem (BE)
(72) Inventeur: MARINET, Fabrice, 13790 CHATEAUNEUF LE ROUGE (FR); PEETERS, Michael, 1320 TOURINNES-LA-GROSSE (BE)
(74) Mandataire: Cabinet Beaumont

(57) **Abrégé**

La présente description concerne un procédé de génération d'une clé de chiffrement et/ou de déchiffrement éphémère (RTKey) par application d'une fonction à un code stocké dans une mémoire non volatile (104, 106).

## Description

### Domaine technique

La présente description concerne de façon générale les circuits et dispositifs électroniques et plus particulièrement la protection des données contenues et/ou traitées par ces circuits et dispositifs. La présente description s'applique plus particulièrement à l'utilisation d'une clé de chiffrement pour la protection de données, et en particulier pour la protection de données stockées dans une mémoire non volatile.

### Technique antérieure

Il existe de nombreuses techniques permettant de protéger des données utilisées par des dispositifs électroniques. Les techniques cryptographiques, comme le chiffrement de données, sont tout particulièrement utilisées à cet effet.

Le chiffrement de données est une opération par laquelle des données utilisables et lisibles sont transformées, à l'aide d'un code, en des données qui ne peuvent être lues que par des personnes ou machines connaissant le code. Ce code utilise, généralement, une clé de chiffrement et/ou de déchiffrement.

Une clé de chiffrement et/ou de déchiffrement peut se présenter sous différentes formes : un mot ou une phrase, une combinaison d'instructions, un mot binaire, etc. La génération d'une clé de chiffrement et/ou de déchiffrement peut être un point décisif de la protection de données.

Il serait souhaitable de pouvoir améliorer au moins en partie certains aspects des techniques de chiffrement connues, et plus particulièrement des procédés de génération d'une clé de chiffrement.

### Résumé de l'invention

Un mode de réalisation pallie tout ou partie des inconvénients des techniques connues de chiffrement de données.

Un mode de réalisation prévoit un procédé de génération d'une clé de chiffrement et/ou de déchiffrement éphémère par application d'une fonction à un code stocké dans une mémoire non volatile.

Selon un mode de réalisation, la clé de chiffrement et/ou de déchiffrement éphémère est stockée dans un registre.

Selon un mode de réalisation, la mémoire non volatile est une mémoire de type ROM.

Selon un mode de réalisation, la fonction est une fonction non réversible.

Selon un mode de réalisation, la clé de chiffrement et/ou de déchiffrement éphémère est générée à chaque démarrage.

Selon un mode de réalisation, la clé de chiffrement et/ou de déchiffrement éphémère est générée à chaque traitement de données sensibles.

Selon un mode de réalisation, la clé de chiffrement et/ou de déchiffrement éphémère est utilisée pour chiffrer et/ou déchiffrer au moins une partie des données de la mémoire non volatile.

Selon un mode de réalisation, ledit code est transféré dans une mémoire volatile avant l'application de ladite fonction.

Un autre mode de réalisation prévoit un produit-programme exécutable comprenant des instructions qui lorsqu'elles sont exécutées par une unité de traitement mettent en oeuvre le procédé décrit précédemment.

Un autre mode de réalisation prévoit un dispositif électronique adapté à mettre en oeuvre une fonction configurée pour générer une clé de chiffrement et/ou de déchiffrement éphémère à partir d'un code stocké dans une mémoire non volatile.

Selon un mode de réalisation, la clé de chiffrement et/ou de déchiffrement éphémère est stockée dans un registre.

Selon un mode de réalisation, la mémoire non volatile est une mémoire de type ROM.

Selon un mode de réalisation, la fonction est une fonction non réversible.

Selon un mode de réalisation, le dispositif comprend en outre un circuit d'encodage et de décodage adapté à utiliser la clé de chiffrement et/ou de déchiffrement éphémère.

Selon un mode de réalisation, le dispositif est adapté à générer plusieurs clés de chiffrement éphémère, chaque clé de chiffrement et/ou de déchiffrement éphémère permettant de chiffrer et/ou de déchiffrer une partie de mémoire différente.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, schématiquement et sous forme de blocs, un mode de réalisation d'un dispositif électronique ; et
la figure 2 représente un organigramme illustrant un mode de mise en oeuvre d'un procédé de génération de clé.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

De plus, les algorithmes de cryptographie complets utilisant des clés de chiffrement et/ou de déchiffrement ne seront pas détaillés, les modes de réalisation décrits s'appliquant à des algorithmes usuels.

Le détail de différentes utilisations de dispositifs électroniques auxquels s'appliquent les modes de réalisation décrits ne sera pas non plus détaillé.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

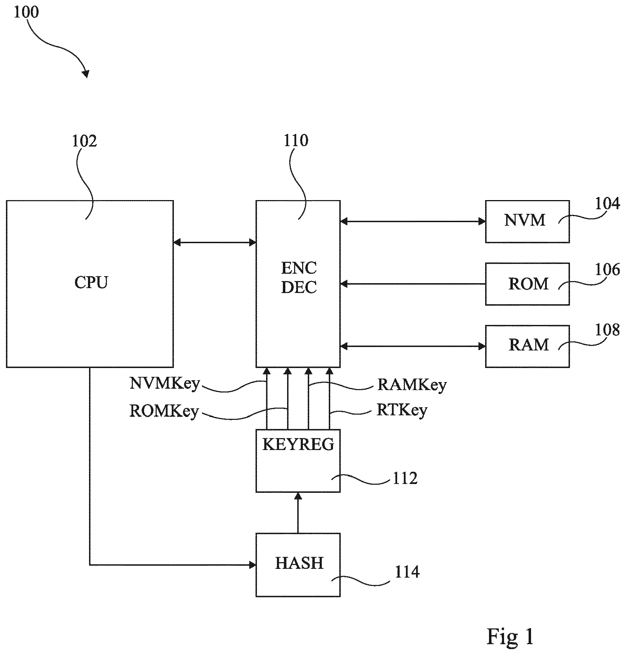

La figure 1 représente, schématiquement et sous forme de blocs, un mode de réalisation d'un dispositif électronique 100. En pratique, le dispositif 100 peut être un circuit intégré, un appareil électronique, un ordinateur, etc.

Le dispositif 100 est équipé d'au moins un processeur 102 (CPU) adapté à traiter des données stockées dans des mémoires. Le dispositif 100 comprend en outre au moins une mémoire non volatile 104 (NVM), au moins une mémoire non réinscriptible de type ROM 106 (ROM), et au moins une mémoire volatile de type RAM 108 (RAM). La mémoire non volatile 104 stocke, par exemple, des données utiles pendant plusieurs utilisations consécutives et qui doivent être stockées pendant des phases dans lesquelles le dispositif 100 est hors-tension. La mémoire non réinscriptible 106 stocke, par exemple, des données utiles pour le démarrage du dispositif 100. La mémoire volatile 108 stocke, par exemple, des données utiles pendant le fonctionnement du dispositif 100. Selon un mode de réalisation, le dispositif 100 peut ne pas comprendre de mémoire non réinscriptible de type ROM.

Tout ou partie des données contenues dans les mémoires 104, 106 et 108 peuvent être chiffrées à l'aide d'un code utilisant une clé de chiffrement et/ou de déchiffrement. Pour que le processeur 102 puisse utiliser ces données, le dispositif 100 est équipé d'un circuit d'encodage et de décodage 110 (ENC DEC). Plus particulièrement, le circuit 110 permet de déchiffrer les données provenant des mémoires 104, 106 et 108 pour les transférer au processeur 102, et le circuit 110 permet, de plus, de chiffrer les données provenant du processeur 102 pour les transférer aux mémoires 104 et 108. En d'autres termes, le circuit 110 est un circuit intermédiaire permettant d'effectuer la liaison entre le processeur 102 et les mémoires 104, 106 et 108.

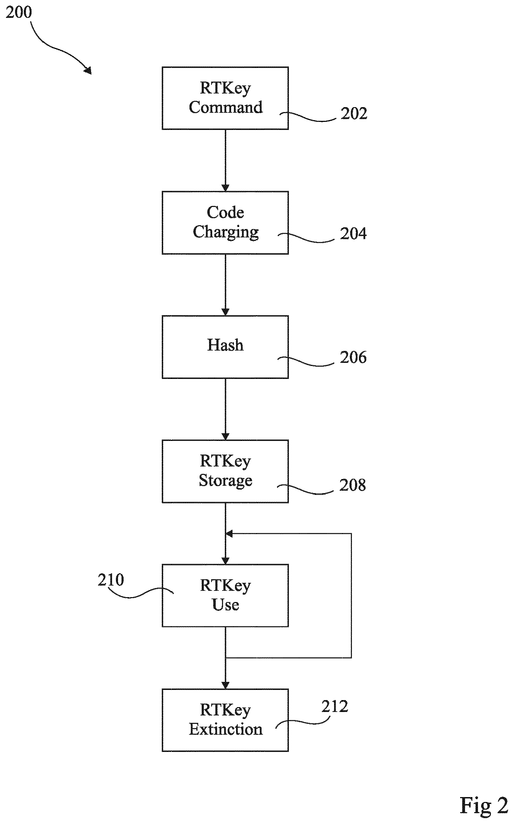

Le circuit d'encodage et de décodage 110 reçoit en outre en entrée des clés de chiffrement et/ou de déchiffrement NVMKey, ROMKey, RAMKey et RTKey permettant de chiffrer et/ou de déchiffrer les données du dispositif 100. Les clés de chiffrement et/ou de déchiffrement NVMKey, ROMKey, RAMKey permettent de chiffrer et/ou de déchiffrer, respectivement, tout ou partie des données des mémoires 104, 106 et 108. La clé RTKey est une clé de chiffrement et/ou de déchiffrement éphémère, ou volatile, qui est uniquement stockée de façon volatile, c'est-à-dire qu'elle disparait à chaque mise hors tension du dispositif 100. La clé RTKey permet de chiffrer et/ou de déchiffrer tout ou partie des données des mémoires 104 et 108. L'utilisation de la clé éphémère RTKey et le procédé de génération de cette clé seront détaillés en relation avec la figure 2.

Selon un mode de réalisation, les clés NVMKey, ROMKey, RAMKey et RTKey sont des clés de cryptographie symétriques. Selon un autre mode de réalisation, les clés NVMKey, ROMKey, RAMKey et RTKey sont des clés de cryptographie asymétriques.

Pour stocker temporairement les clés NVMKey, ROMKey, RAMKey et RTKey, le dispositif 100 est équipé d'un ou plusieurs registres 112 (KEYREG). Le registre reçoit les clés NVMKey, ROMKey, et RAMKey des mémoires dans lesquelles elles sont stockées, par exemple les mémoires 104 ou 106. A titre de variante (non représentée), les clés NVMKey, ROMKey, et RAMKey peuvent être stockées par codage physique dans des circuits logiques du dispositif. Le registre 112 reçoit la clé éphémère RTKey d'une unité de traitement 114 (HASH). Selon un mode de réalisation, la clé RTKey est stockée au moins dans le registre 112 et éventuellement aussi dans la mémoire volatile 108.

L'unité de traitement 114 est, par exemple, un processeur adapté à mettre en oeuvre une fonction permettant de générer la clé éphémère RTKey à partir d'au moins une donnée fournie, de préférence plusieurs données, par le processeur 102. La fonction est par exemple une fonction non réversible, par exemple une fonction de signature, une fonction de hachage, ou une fonction de type CRC (Cyclic Redundancy Check). Les données fournies par le processeur 102 sont une partie de code stockée dans une mémoire non volatile, par exemple la mémoire 104 ou la mémoire 106. La fonction première de cette partie de code est, par exemple, indépendante de son utilisation pour générer la clé éphémère RTKey. A titre d'exemple, la partie de code est, par exemple, une partie d'un code de démarrage stockée dans la mémoire non réinscriptible 106. Selon une variante de réalisation, la partie de code peut être transférée dans une mémoire volatile, par exemple la mémoire 108, avant d'être exécutée par le processeur 102.

Le fonctionnement du dispositif 100 sera détaillé en relation avec la figure 2.

La figure 2 représente un organigramme illustrant un mode de mise en oeuvre d'un procédé 200 de génération de la clé éphémère RTKey par le dispositif 100.

A une étape 202 (RTKey Command), le dispositif 100 s'apprête à traiter des données potentiellement sensibles et qui nécessitent d'être chiffrées et/ou déchiffrées. Le dispositif 100 en informe le processeur 102 en lui envoyant une commande de génération de la clé éphémère RTKey. Selon un mode de réalisation, cette étape peut avoir lieu à chaque démarrage du dispositif 100 si toutes les données stockées dans les mémoires 104, 106 et 108 et traitées par le processeur 102 sont sensibles. Selon une variante de réalisation, cette étape peut avoir lieu à chaque fois que des données sensibles s'apprêtent à être traitées par le processeur 102.

A une étape 204 (Code Charging), le processeur 102 récupère la partie de code stockée dans une des mémoires non volatiles, par exemple la mémoire 104 ou la mémoire 106, permettant de générer la clé RTKey. Cette partie de code est déchiffrée, si besoin avec la clé ROMKey ou NVMKey selon le cas, par le circuit d'encodage et de décodage 110, puis transmise par le processeur 102 à l'unité de traitement 114. Pour rappel, la partie de code est par exemple une portion d'un code de démarrage stocké dans la mémoire non réinscriptible 106.

A une étape 206 (Hash), l'unité de traitement 114 met en oeuvre la fonction permettant de générer la clé éphémère RTKey à partir de la partie de code envoyée par le processeur 102. La fonction est par exemple une fonction de signature, de préférence une fonction de hachage.

A une étape 208 (RTKey Storage), l'unité de traitement 114 transfère la clé de chiffrement éphémère RTKey au registre 112 pour qu'elle y soit stockée. Le registre 112 permet en outre de stocker les clés NVMKey, ROMKey, et RAMKey.

A une étape 210 (RTKey Use), le registre 112 fournit les clés NVMKey, ROMKey, RAMKey et RTKey au circuit d'encodage et de décodage 110 qui les utilise pour chiffrer et/ou déchiffrer des données. Plus particulièrement, le circuit 110 utilise la clé RTKey pour chiffrer et/ou déchiffrer tout ou partie des données de la mémoire non volatile 104. La clé RTKey est utilisée autant de fois que nécessaire pendant la durée de mise sous tension du dispositif 100.

A une étape 212 (RTKey Extinction), la clé éphémère RTKey disparaît, par exemple par la mise hors tension du dispositif 100, ou est détruite par l'intermédiaire d'une commande envoyée, par exemple par le processeur 102.

Un avantage de ce mode de réalisation est qu'il permet d'éviter certains types d'attaque dans lesquels un processeur d'un dispositif électronique est configuré, par un pirate, pour fonctionner, par exemple, de façon qu'il délivre les données contenues dans les mémoires 104, 106 et 108. En utilisant une clé éphémère du type de la clé RTKey, le processeur reconfiguré ne pourra fournir que des données chiffrées avec une clé qui n'est pas accessible par un pirate. En effet, la clé étant uniquement stockée de façon volatile, elle ne sera plus accessible après reconfiguration du processeur.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, la description ne détaille que l'utilisation d'une seule clé éphémère, on pourra prévoir l'utilisation de plusieurs clés éphémères par un même dispositif électronique, chaque clé pouvant, par exemple, protéger tout ou partie des données d'une des mémoires.

De plus, selon une variante, le dispositif 100 pourrait ne pas comprendre de mémoire non réinscriptible 106, qui serait alors remplacée par une mémoire non volatile, par exemple par la mémoire non volatile 104.

Enfin, la mise en oeuvre pratique des modes de réalisation et variantes décrits est à la portée de l'homme du métier à partir des indications fonctionnelles données ci-dessus.

## Revendications

1. Procédé (200) de génération d'une clé de chiffrement et/ou de déchiffrement éphémère (RTKey) par application d'une fonction à un code stocké dans une mémoire non volatile (104, 106) .

2. Procédé selon la revendication 1, dans lequel la clé de chiffrement et/ou de déchiffrement éphémère (RTKey) est stockée dans un registre (112).

3. Procédé selon la revendication 1 ou 2, dans lequel la mémoire non volatile (106) est une mémoire de type ROM.

4. Procédé selon la revendication 3, dans lequel ledit code est une partie d'un code de démarrage.

5. Procédé selon l'une quelconque des revendications 1 à 4, dans lequel la fonction est une fonction non réversible.

6. Procédé selon l'une quelconque des revendications 1 à 5, dans lequel la clé de chiffrement et/ou de déchiffrement éphémère (RTKey) est générée à chaque démarrage.

7. Procédé selon l'une quelconque des revendications 1 à 5, dans lequel la clé de chiffrement et/ou de déchiffrement éphémère (RTKey) est générée à chaque traitement de données sensibles.

8. Procédé selon l'une quelconque des revendications 1 à 7, dans lequel la clé de chiffrement et/ou de déchiffrement éphémère (RTKey) est utilisée pour chiffrer et/ou déchiffrer au moins une partie des données de la mémoire non volatile (106).

9. Procédé selon l'une quelconque des revendications 1 à 8, dans lequel ledit code est transféré dans une mémoire volatile avant l'application de ladite fonction.

10. Produit-programme exécutable comprenant des instructions qui lorsqu'elles sont exécutées par une unité de traitement mettent en oeuvre le procédé selon l'une quelconque des revendications 1 à 9.

11. Dispositif électronique (100) adapté à mettre en oeuvre une fonction configurée pour générer une clé de chiffrement et/ou de déchiffrement éphémère (RTKey) à partir d'un code stocké dans une mémoire non volatile (104, 106) .

12. Dispositif selon la revendication 10, dans lequel la clé de chiffrement et/ou de déchiffrement éphémère (RTKey) est stockée dans un registre (112).

13. Dispositif selon la revendication 10 ou 11, dans lequel la mémoire non volatile (106) est une mémoire de type ROM.

14. Dispositif selon la revendication 13, dans lequel ledit code est une partie d'un code de démarrage.

15. Dispositif selon l'une quelconque des revendications 10 à 14, dans lequel la fonction est une fonction non réversible.

16. Dispositif selon l'une quelconque des revendications 10 à 15, comprenant en outre un circuit d'encodage et de décodage (110) adapté à utiliser la clé de chiffrement et/ou de déchiffrement éphémère (RTKey).

17. Dispositif selon l'une quelconque des revendications 10 à 16, adapté à générer plusieurs clés de chiffrement éphémère (RTKey), chaque clé de chiffrement et/ou de déchiffrement éphémère permettant de chiffrer et/ou de déchiffrer une partie de mémoire différente.
